# EUROPEAN PATENT APPLICATION

(11) **EP 1 604 809 A1**
(43) Date of publication of application: **14.12.2005**
(21) Application number: 05104865.0
(22) Date of filing: 03.06.2005
(51) Int. Cl.: B29D 30/06, B60C 23/04

(54) **Method and apparatus for preparing a tire surface for installation of an electronic device**

(30) Priority: 10.06.2004 US 865709
(71) Applicant: THE GOODYEAR TIRE & RUBBER COMPANY, Akron, Ohio 44316-0001 (US)
(72) Inventor: Lettieri, Joseph Carmine, OH 44224, Stow (US); Hahn, Bruce Raymond, 44236, Hudson, Ohio (US); Majumdar, Ramendra Nath, OH 44236, Hudson (US); Logan, Brian Matthew, OH 44302, Akron (US); Lukich, Lewis Timothy, OH 44313, Akron (US); Slicker, Jason Gordon, OH 44646, Massillon (US); Rex, William Allen, OH 44230, Doylestown (US); Tubb, Gary Edwin, OH 44321, Copley (US); Dando, Rebecca Lee, OH 44685, Uniontown (US)
(74) Representative: Kutsch, Bernd

(57) **Abstract**

A method and an apparatus for preparing a tire target surface (40) for installation of an electronic device (34) such as a transponder apparatus of the type comprising a transponder housing and an antenna is disclosed. The method includes the steps: identifying a tire target surface (40) having a footprint configured to receive the electronic device (34) thereagainst; positioning the tire target surface (40) in an accessible relationship to cleaning apparatus (42); and actuating the cleaning apparatus (42) to substantially eliminate undesired surface agents from the tire target surface (40). Relative movement between the cleaning apparatus (42) and the tire target surface (40) may be initiated to create the desired target surface shape, such as an annular configuration, and to facilitate a substantial purging of undesired surface agents from substantially all of the tire target surface (40).

## Description

### Field of the Invention

The invention relates generally to the installation of an electronic device, preferably a tire sensor or a tire monitoring system into a tire, and, more specifically, to tire surface preparation and an cleaning apparatus for preparing a tire surface.

### Background of the Invention

It is common to employ an apparatus, including an antenna, for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data.

It is known in the art to employ an antenna to transmit, at radio frequencies, data from a transponder contained within the structure of a tire or tire and wheel assembly. The antenna comprises a wire or strands of wire and may be formed into a loop and may be an exposed conductor or a conductor sheathed in an extruded covering formed from a suitable material such as plastic. The antenna may comprise an enclosed loop or other known configurations. The antenna and transponder package connected thereto may be affixed to a green tire in a pre-build assembly process or attached to a finished tire in a post-cure operation. While the antenna and transponder may be incorporated into a tire during "pre-cure" manufacture, in practice it is very difficult to do this. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any antenna and the electronic circuitry associated therewith built into the tire must be able to maintain structural integrity and the mechanical connection between the antenna and transponder package during the diametric enlargement of the tire during its manufacture. Once assembled into the tire, any detected malfunction in the antenna, transponder, or antenna to transponder connection that cannot be repaired destroys the utility of the tire and may necessitate a scrapping of the tire. Hence, placement of an antenna-transponder assembly into a tire during its manufacture carries risk that subsequent failure or breakage of assembly components will necessitate the destruction of the otherwise suitable host tire.

In order to protect the electronics from undergoing the rigors of a tire cure cycle, it has been proposed that the antenna and transponder apparatus be applied by adhesive to a designated tire region in a post-cure operation. However, a positive adhesive application of an antenna and transponder assembly to a tire inner sidewall has proven problematic for a number of reasons. Release agents or other contaminants, present on the designated target region of the tire, can act to weaken or inhibit an adhesive bond between the transponder assembly and the tire. Degradation in the quality of the adhesive bond between the tire and the transponder assembly may result in a separation at some point in the useful life of the tire. Failure of the bond between the transponder assembly and the tire resulting from surface agents, therefore, is a concern with long term implications.

There is, accordingly, a need for ensuring a positive adhesive bond between a tire inner wall and an electronic device such as a transponder assembly through the process of targeted tire surface preparation. A suitable method and apparatus for eradicating agents and/or contaminants from a designated target area to the exclusion of other non-targeted areas on a tire inner sidewall is desired. Such a method and apparatus for preparing the targeted tire surface must function in an efficient and, preferable, automated manner. Such a procedure further must be flexible in allowing alternative surface preparation techniques and materials to be utilized if so desired or required. Additionally, any suitable method and apparatus must be both cost effective and reliable and operate with minimal environmental impact.

### Summary of the Invention

Pursuant to the invention a method and an apparatus for cleaning a tire surface for the purpose of adhering an electronic device such as a transponder, sensor, or antenna or other device to the target surface. According to one aspect of the invention, the target surface region of an uncured tire is covered in whole or in part by a thin, flexible membrane prior to the application of the lubricating release agent. The tire is then cured and the film removed, revealing a clean liner surface. Pursuant to another aspect of the invention, an organic or inorganic solvent or surfactant may be used to clean release agents off a target surface of a cured tire. Preferably, the solvent is activated with a brush of the cleaning apparatus while or after application. Yet another aspect of the invention utilizes buffing or grinding of the target tire surface to remove the release agent and contaminants from the tire. A solvent may be used in combination with buffing or grinding to remove the ground or brushed material from the surface to prevent such material from being reapplied to the tire. Still a further aspect of the invention utilizes a high-pressure fluid jet or a high-pressured steam to clean release agents from the target tire surface. Another aspect of the invention exposes the target tire surface to a laser beam of sufficient intensity to burn away the surface of rubber containing the release agent. A jet of Flume plasma on the target tire surface may also be employed in another aspect of the invention to enhance the ability of the transponder, sensor, or antenna to adhere to the liner.

In yet a further aspect of the invention, the method includes the step of identifying a fine target surface having a footprint configured to complement the electronic device.

According to the invention, the electronic device preferably is a transponder apparatus of the type comprising a transponder housing and an antenna, such as an annular antenna. Adapted to the slope of the electronic device, the desired tire target surface slope preferably has an annular configuration.

In a further embodiment of the invention, means for rotating the tire relative to the cleaning assembly or means for rotating the clearing assembly relative to the tire target surface are provided.

In yet a further embodiment of the invention, the cleaning apparatus comprises a protective covering, ant the method comprises applying the protective covering to the tire target surface.

### Brief Description of the Drawings

The invention will be described by way of example and with reference to the accompanying drawings in which:
FIG. 1 is a perspective view shown partially in section of a tire having a transponder and antenna attached to a target surface portion of the inner tire liner;
FIG. 2 is a section view through a representative tire having a shielding strip affixed to and removable from a target tire surface pursuant to the invention;
FIG. 3 is an alternative embodiment of the invention in which a representative target tire surface is cleaned by the use of a solvent applied against the surface and/or in combination with a cleaning device such as a brush;
FIG. 4 is a third alternative embodiment of the invention in which a representative target tire surface is cleaned by a buffing and grinding procedure;
FIG. 5 is a fourth alternative embodiment of the invention in which a representative target tire surface is cleaned by the use of a high pressure fluid jet;
FIG. 6 is a fifth alternative embodiment of the invention in which a representative target tire surface is cleaned by a laser;
FIG. 7 is a sixth alternative embodiment of the invention in which a representative target tire surface is cleaned by means of plasma activation;
FIG. 8 is a side perspective view of apparatus for rotating a tire and simultaneously cleaning a target tire surface; and
FIG. 9 is a rear perspective view of the apparatus shown in FIG. 8.

### Detailed Description of the Invention

A tire pressure monitoring system typically comprises a transponder having one or more sensors. The transponder and associated electronics are housed within a package. In order to send or receive RF signals, a transponder should have an antenna. The antenna is preferably annular in configuration in the subject invention but may have alternative shapes if desired. The transponder and antenna assembly may thus be a loop configuration or may alternatively be configured as a patch to be applied to a tire surface. The antenna and associated transponder, for the reasons discussed previously, is preferably affixed by adhesive or other means to the tire by way of a post manufacture procedure. As used herein, an "annular antenna" may be circular, oblong, symmetrical, or asymmetrical without departing from the subject inventive principles. However, the preferred configuration of the antenna is circular and sized to overlap preferably the tire sidewall region to which it attaches. Other locations such as upper side wall or tire crown area are also possible for assembly location. The antenna may comprise a single wire or a plurality of strands. Various commercially available transponders, sensors, and other electrical devices deployed in combination with an annular antenna formed from conventional conductive materials are suitable for use in conformance with the principles of the subject invention.

Acceptable materials for the antenna wire include steel, aluminum, copper, copper alloys or other electrically conducting wire. As disclosed herein, the wire diameter is not generally considered critical for operation as an antenna for a transponder. For durability, stranded steel wire consisting of multiple strands of fine wire is preferred. Other wire options available include ribbon cable, ribbon conductors on fabric strands, flexible circuits, conductive film, conductive rubber, etc.

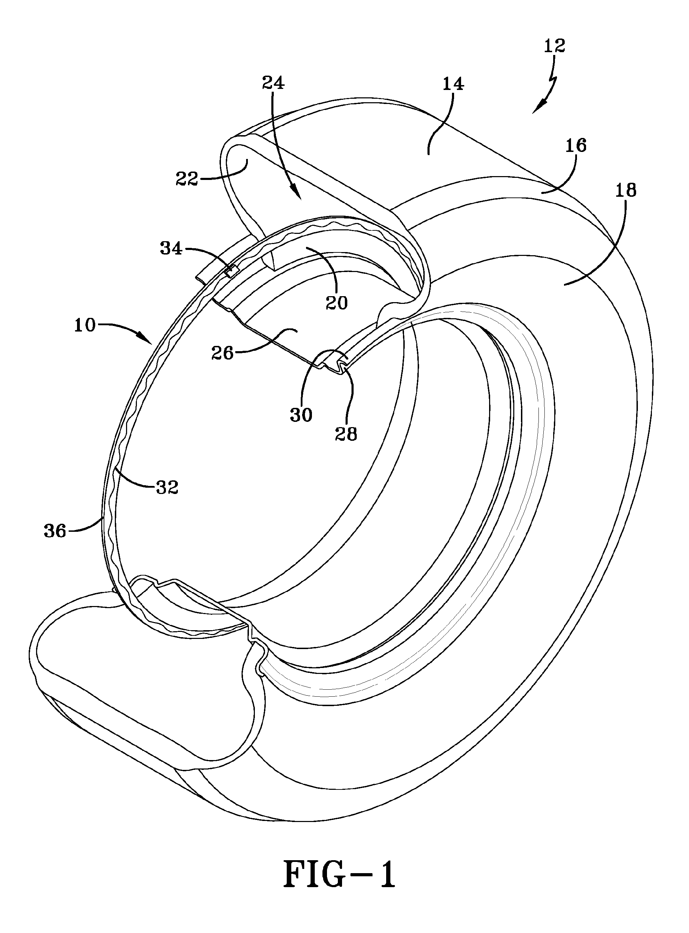

Referring initially to Fig. 1, a preferred embodiment 10 of the subject invention is shown deployed within a tire 12. The tire 12 is formed from conventional materials such as rubber or rubber composites by conventional means and may comprise a radial ply or bias ply configuration. A typical tire 12 is configured having a tread 14, a shoulder 16, an annular sidewall 18, and a terminal bead 20. An inner liner 22 is formed and defines a tire cavity 24. The tire 12 is intended for mounted location upon an annular rim 26 having a peripheral rim flange 28 and an outer rim flange surface 30. Rim 26 is conventionally configured and composed of a suitably strong metal such as steel.

An annular antenna 32 is provided and, in the preferred embodiment, embodies a sinusoidal configuration. Antenna 32 may be alternatively configured into alternative patterns as in a patch or comprise a straight wire(s) if desired and may be filament wire, or cord or stranded wire. Acceptable materials for the wire include steel, aluminum, copper, copper alloys or other electrically conducting wire. As mentioned previously, the wire diameter is not generally considered critical for operation as an antenna and multiple strands of fine wire is preferred. The curvilinear or zigzag form of antenna 32 provides flexibility and minimizes the risk of breakage during manufacture and use explained below.

With continued reference to Fig. 1, a transponder module 34 of the general type described above is provided and may include means for sensing tire parameters such as pressure and temperature. Included as a preferable but not necessary part of the apparatus 10 is an antenna carrier strip 36 formed into the annular configuration shown. Carrier strip 36 is formed of electrically insulating, elastic material that lends rigidity and structural integrity to the antenna and transponder assembly. In the post manufacturing state, therefore, the apparatus 10 comprising antenna 32, transponder module 34, and carrier strip 36, in a unitary, generally circular, assembly that is readily transportable and handled for attachment to tire 12. The diameter of the apparatus assembly 10 is a function of the size of the tire 12 and the tire attachment location selected as preferred by the user.

In combined reference to FIG 1, the apparatus 10 is affixed to liner 22 of the tire 12 in a post-manufacture assembly operation. Attachment may be by means of an adhesive or other known conventional means of affixing a device to a rubber composite. The inner liner 22 is typically coated with a lining cement of a type conventional in the tire manufacturing art during the manufacturing procedure. Such agents, while beneficial to facilitating ready release of the tire from a mold, can be inimical to achieving a reliable adhesive bond between the apparatus 10 and the liner 22. In order to remove such agents from the target tire surface or shield the surface from the application of such agents to the tire, the subject invention teaches a preferred and alternative methods and apparatus as will be explained following.

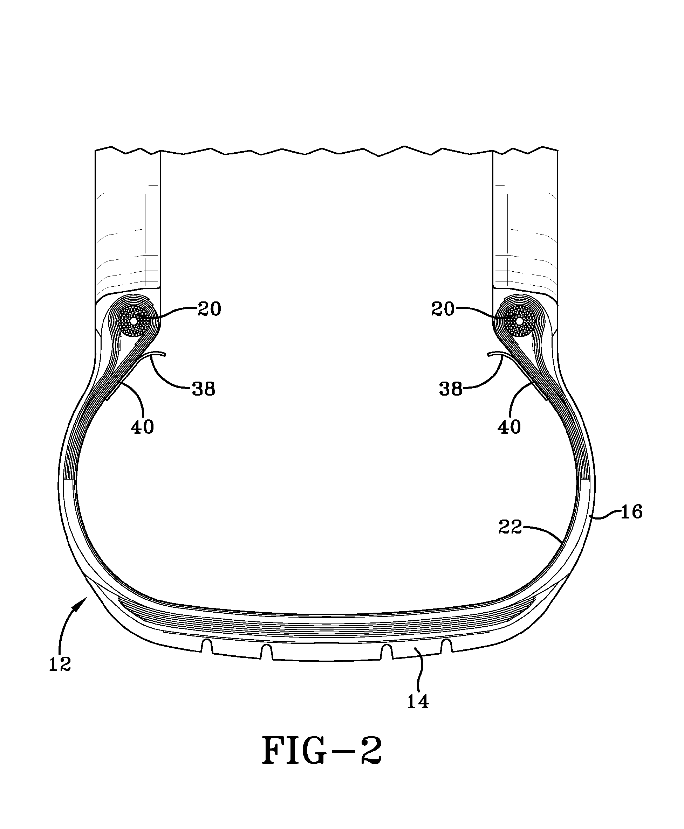

Referring to FIGS. 1 and 2, a tire 12 is shown in section having an annular strip of film 38 attached to the inner liner 22 proximate to the bead 20. The film 38 may be affixed by reliance upon the natural tack of the uncured innerliner and/or in the use of a suitable adhesive. The film 38 may be formed of a suitable available material such as nylon, MYLAR, or other thermoformable material that can survive tire cure but will not bond permanently to the tire. The thin, flexible membrane 38, in covering surface 40 prior to the application of the lubricating release agent, thus substantially shields the target annular surface 40 from exposure to release agents applied subsequently to other portions of the inner liner 22. Once the tire is fully formed and cured, the strip 38 may be removed to expose the agent-free target surface 40 therebelow. Surface 40, relatively uncontaminated by release agents, provides a good surface against which the annular apparatus 10 may be attached by adhesion or the like. While surface 40 and strip 38 are annular in form to complement the form of apparatus 10, it will be appreciated that other shaped apparatus, such as a patch, will require a like shaped target surface 40 and covering film 38.

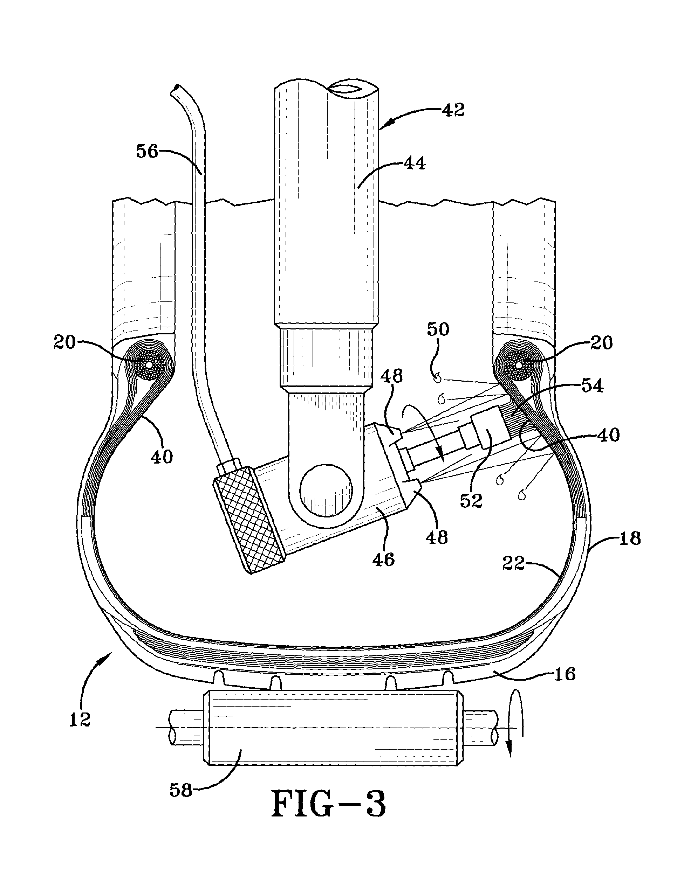

FIG. 3 shows an alternative manner in which to achieve a relatively agent free liner surface against which a transponder apparatus may be bonded. Pursuant to FIG. 3, a cleaning apparatus 42 is provided comprising an elongate support arm 44 to which a transversely mounted nozzle 46 is pivotally attached. Nozzle 46 pivots in order to allow the direction of the nozzle to be adjusted toward the target surface 40. The nozzle 46 includes an applicator end 48 from which alternative material may be directed toward surface 40. By way of example with no intent to limit the invention thereto, a spray of solvent 50 is shown in FIG. 3 exiting nozzle end 48. Organic or inorganic solvents or surfactants may be used to clean release agents off a cured tire. Examples, without intending to limit the selection of solvent material, include standard soaps, Alconox, D-Limonene, Trichloroethylene, and solutions in standard use in the process of tire buffing and repair. Such solvents and surfactants can, alternatively, be applied to the tire using any number of techniques such as a clean cloth or a brush 52. The bristles 54 from brush 52 clean the surface 40 as or after the solvent 50 is applied. A pneumatic supply line 56 powers the spray unit and pressurizes the solvent 50. A roller drive 58 of a type common to the tire industry may be used to impart rotation to the tire while maintaining the nozzle 46 at a fixed optimal position relative surface 40. In rotating the tire, surface 40 cleaned by the apparatus will result in an annular form. Alternatively, the tire may be maintained stationary while the cleaning apparatus rotates or otherwise moves relative thereto. In the application of a patch where a relatively small target surface 40 is needed, both the tire and the cleaning nozzle may be stationary. Other fixtures for creating alternatively shaped and located target surfaces 40 may be employed as needed.

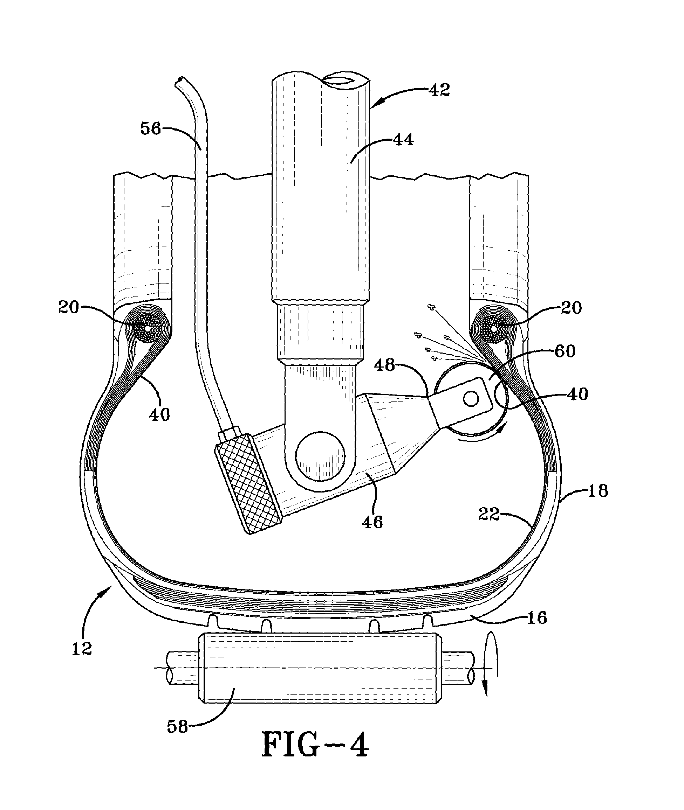

FIG. 4 illustrates a further alternative cleaning embodiment comprising the applicator assembly described previously but employing a grinding roller 60 pivotally mounted to the end 48 or nozzle 46. Tire buffing or grinding of the tire surface may be used to remove release agents from the tire. It is important to remove the ground or brushed material from the surface as it is made loose, to prevent such material from being smeared and reapplied to the tire. The use of solvents mentioned above in combination with buffing or grinding may further increase the cleanliness of the liner surface.

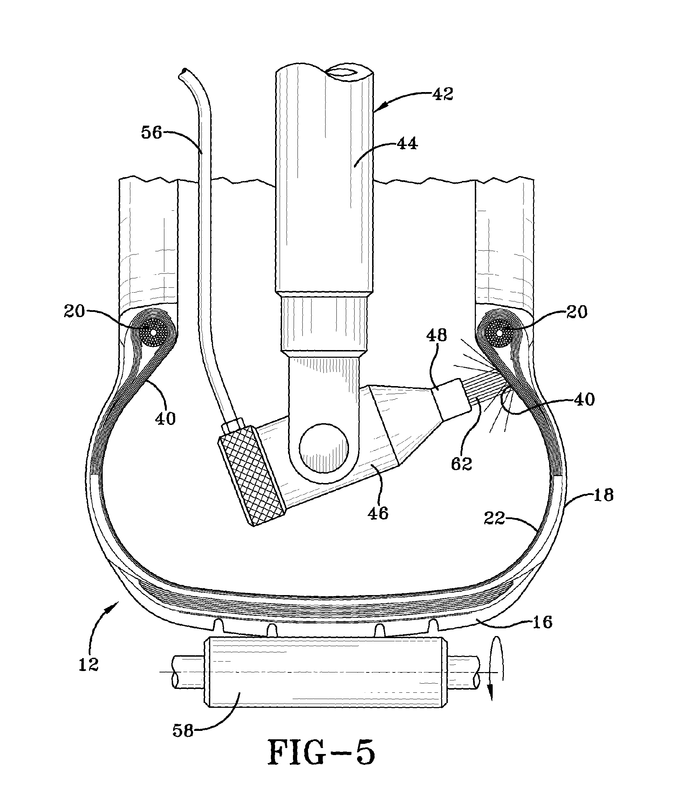

FIG. 5 illustrates the use of a high pressure fluid jet 62 to clean a release agent from target surface 40. The fluid in the jet may be water and the water may be heated to enhance cleaning efficiency. Other fluids may be considered and fluid heating may not be necessary. A heated, high-pressure water jet is commercially available such as a HDS 650 pressure washer manufactured by Kärcher Corporation located in Winnenden, Germany. Using such a commercially available washer, a water jet of approximately 1000 psi and 170 degrees F (76.7°C) is formed. Adding solvents or surfactants as described above to the water jet may further be employed to increase the cleaning efficacy. The nozzle 46 is angularly adjustable to allow the stream 62 to impact the target surface 40 at an optimum angle and location to clean the surface with an optimum efficiency and minimize the amount of water and solvents/surfactants required.

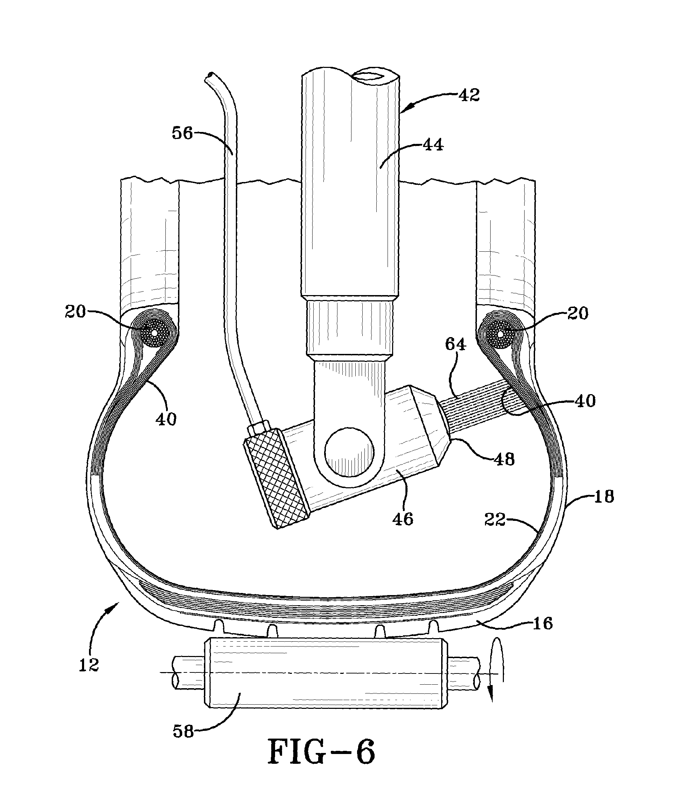

FIG. 6 illustrates laser cleaning in which the surface of the liner may be exposed to a laser beam 64 with sufficient intensity to burn away the surface of rubber containing the release agent. It is desirable to remove the charred rubber layer left behind using, for example, solvents, buffing or other known techniques.

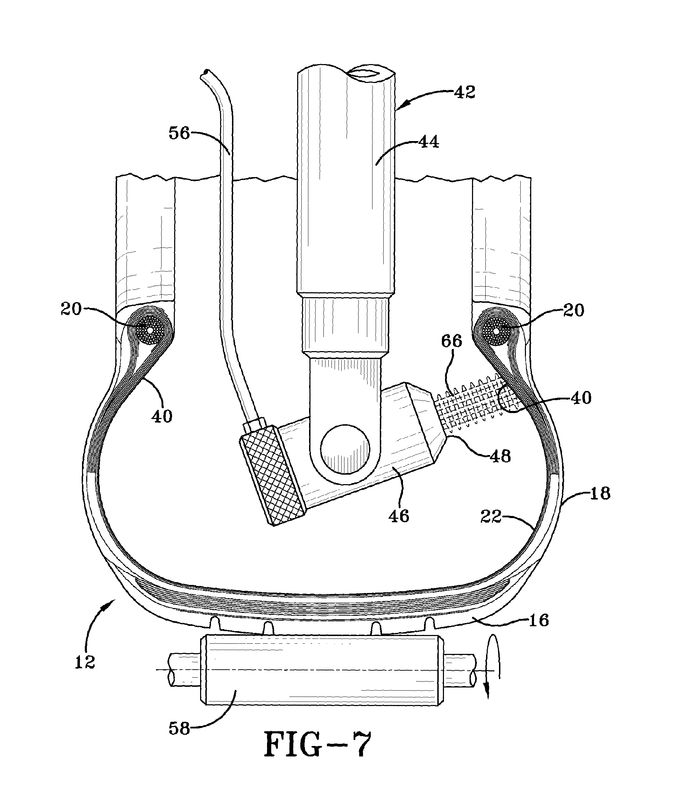

FIG. 7 illustrates the use of a plasma jet 66 on the tire inner liner surface. Surface "activation" by means of a plasma jet may enhance the ability of an object or substance to adhere to the liner, at least for a short period of time.

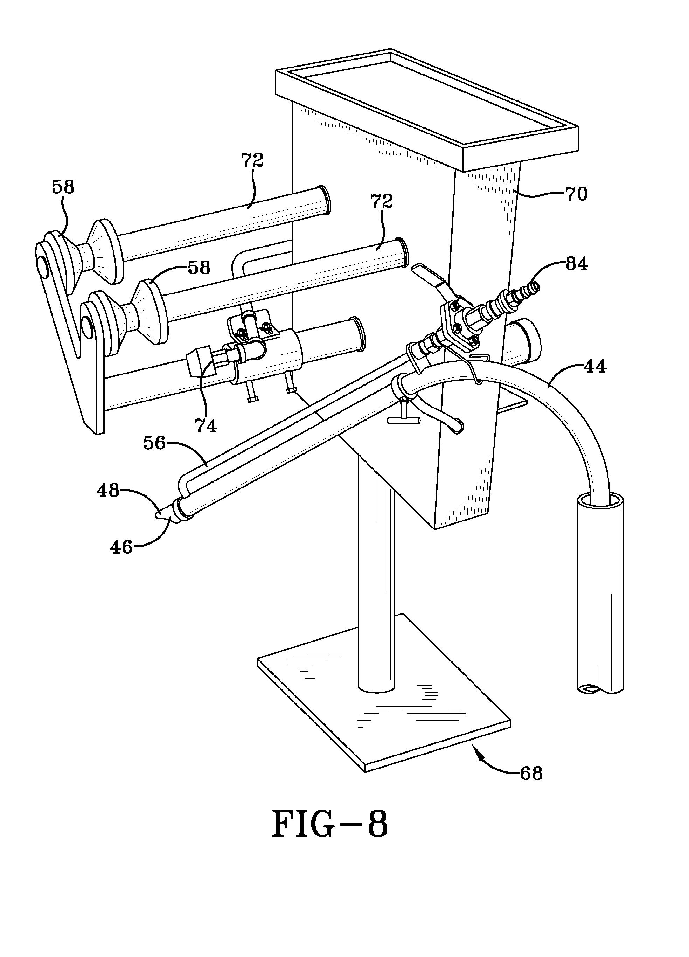

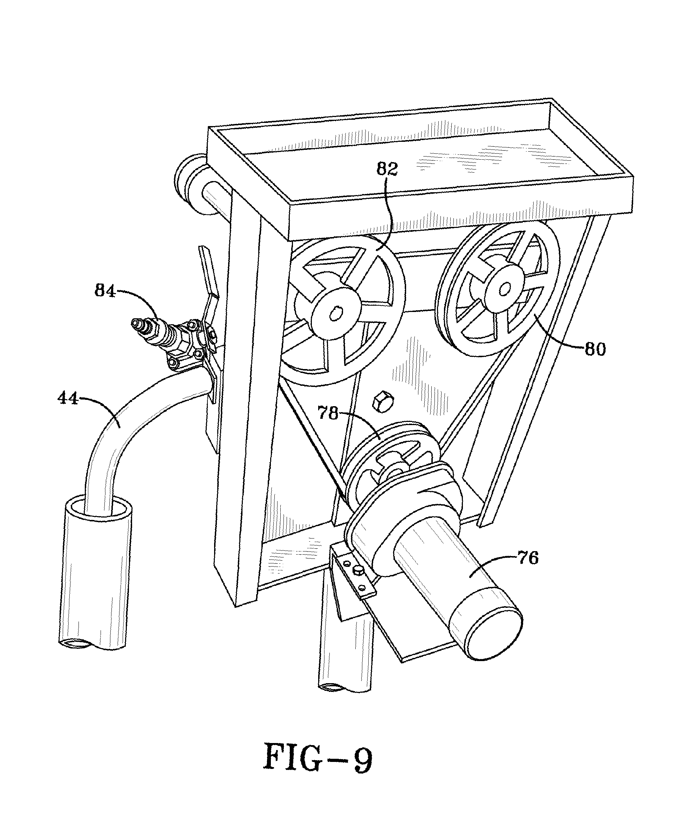

FIGS. 8 and 9 illustrate a drive system for use in the above embodiments. A vacuum system, preferably of a venturi type, comprises components 44, 46, 48, 56, and 84. A high pressure air line fitting 84; a high pressure air conduit 56; and nozzle components 46 and 48 comprise the system. A drain pipe 44 is disposed to conduct excess material away. The nozzle 74 provides the means for delivering a cleaning medium, for example high pressure hot water. An upright stationary stand 68 supports panel 70. A pair of rotational drive shafts 72 extends from the panel 70 and each supports a roller at a remote end. A main drive shaft and motor 76 is coupled to a drive wheel 78 which drives pulleys 80, 82 to rotate shafts 72. The fitting 84 is mounted to a rearward end of the air conduit 56. Pursuant to the above, a solvent, surfactant or other cleaning device may be delivered via the nozzle 74. A tire mounted upon rollers 58 is rotated while the nozzle 74 directs solvent to the tire target surface whereby substantially eliminating surface mold release agents from such surface. Resultingly, the target surface is clean and prepared for receipt of a transponder assembly by adhesive application or other known technique.

It will be appreciated that the subject invention achieves the objectives of providing method and apparatus for cleaning a tire target surface for the adhesion of a product such as a sensor, antenna or ID tag. The techniques herein describe for cleaning the target surface, and other variations obvious to one skilled in the art, can be used as alternative substitutions to avoid different system constraints. For example, some techniques are solvent-less and pose no environmental concerns while some are non-invasive and will not damage or alter the surface of the target tire surface. Others are more cost efficient. A user, accordingly, can select the technique that meets the functional objective of cleaning a target tire surface while also meeting the cost and environmental issues associated with commercial implementation of the cleaning system.

## Claims

1. A method for preparing a tire surface (40) for installation of an electronic device (34), the method comprising the steps of:
a) identifying a tire target surface (40) having a footprint configured to receive the electronic device (34) thereagainst;
b) positioning the tire target surface (40) in an accessible relationship to a cleaning apparatus (42);
c) actuating the cleaning apparatus to substantially eliminate undesired surface agents from the tire target surface (40).

2. The method according to claim 1, further including the step of:
establishing a relative movement between the cleaning apparatus (42) and the tire target surface (40) to facilitate a substantial purging of undesired surface agents from substantially all of the target surface (40).

3. The method according to claim 1 or 2, further comprising the steps of:
applying a protective covering (38) to the tire target surface (40) prior to the introduction of undesired surface agents to the tire (12), and
removing the protective covering (38) from the tire target surface (40) after the undesired surface agents have been introduced to the tire (12).

4. The method according to at least one of the previous claims, further comprising the step of:
securing the electronic device (34) against the tire target surface (40).

5. The method according to at least one of the previous claims, wherein the movement between the cleaning apparatus (42) and the time target surface (40) comprises a rotation of the tire (12) and/or a rotation of the cleaning apparatus (42).

6. The method according to at least one of the previous claims, further comprising the step of:
applying a solvent (50) from the cleaning apparatus (42) to the tire target surface (40); and/or
grinding the tire target surface (40) with the cleaning apparatus (42); and/or
applying a pressurized steam of fluid from the cleaning apparatus (42) against the tire target surface (40); and/or
applying a laser energy steam from the cleaning apparatus (42) against the tire target surface (40); and/or
applying a plasma energy steam from the cleaning apparatus (42) against the tire target surface (40).

7. A cleaning apparatus for preparing a tire surface for installation of an electronic device (34), the cleaning apparatus comprising:
means for positioning a tire target surface (40) in an accessible position; and
a cleaning assembly being engageable with the tire target surface (40) for substantially purging the tire target surface (40) of undesired surface agents.

8. The cleaning apparatus according to claim 7, further including means for establishing relative movement between the cleaning apparatus (42) and the tire target surface (40).

9. The cleaning apparatus according to claim 7 or 8, wherein the cleaning assembly (42) comprises an ejector nozzle (46) for directing at least one cleaning agent at the tire target surface (40).

10. The cleaning apparatus according to claim 9, wherein the ejector nozzle (46) has a discharge end (48) proximally positioned relative to the tire target surface (40).
